# EUROPÄISCHE PATENTSCHRIFT

(11) **EP 0 762 323 B1**
(45) Veröffentlichungstag und Bekanntmachung des Hinweises auf die Patenterteilung: **27.10.2004**
(21) Anmeldenummer: 96112883.2
(22) Anmeldetag: 09.08.1996
(51) Int. Cl.: G06K 19/077

(54) **Verfahren und Vorrichtung zur Herstellung eines Spulenelements für einen Datenträger mit integriertem Schaltkreis und nichtberührender Kopplung**
Method and apparatus for manufacturing a coil element for a record carrier having an integrated circuit and contactless coupling
Procédé et dispositif pur la fabrication d'un élément de bobine pour un support de données à circuit intégré et couplage sans contact

(30) Priorität: 11.08.1995 DE 19529640
(43) Veröffentlichungstag der Anmeldung: 12.03.1997
(73) Patentinhaber: Giesecke & Devrient GmbH, 81677 München (DE)
(72) Erfinder: Oertel, Achim, D-83026 Rosenheim (DE)
(74) Vertreter: Klunker . Schmitt-Nilson . Hirsch

(56) Entgegenhaltungen:
- EP-A- 0 481 776
- EP-A- 0 640 940
- EP-A- 0 640 949
- EP-A- 0 689 164
- DE-A- 4 307 064
- DE-A- 4 421 607

## Beschreibung

Die Erfindung betrifft ein Spulenelement für einen Datenträger mit integriertem Schaltkreis und nichtberührender Kopplung, insbesondere eine IC-Karte, und ein Verfahren zur Herstellung eines derartigen Spulenelements.

IC-Karten werden in verschiedenen Anwendungsbereichen eingesetzt, beispielsweise als Telefonkarten, Kreditkarten, Scheckkarten, Ausweiskarten usw.

Eine IC-Karte weist in der Regel ein Kontaktfeld auf, über das ein in der Karte eingebetteter IC mit einer externen Vorrichtung zur Datenverarbeitung gekoppelt werden kann. Hierzu weist die Vorrichtung zur Datenverarbeitung ein entsprechendes Gegenstück zum Kontaktfeld der IC-Karte auf, das bei Bedarf mit dem Kontaktfeld in eine leitende Verbindung gebracht werden kann.

Es sind auch IC-Karten bekannt, die anstelle des Kontaktfelds oder auch zusätzlich zum Kontaktfeld eine Spule aufweisen. Mit Hilfe dieser Spule ist eine berührungsfreie Daten- und Energieübertragung zwischen der IC-Karte und der Vorrichtung zur Datenverarbeitung mittels elektromagnetischer Strahlung möglich. Die Spule wird während des Herstellungsprozesses der IC-Karte in den Kartenkörper eingebettet. Es sind verschiedene Verfahren bekannt, eine IC-Karte mit einer Spule auszustatten.

Aus der US-PS 4,999,742 ist es bekannt, eine gewickelte Drahtspule auf ein Substrat aufzukleben und anschließend mit einer Deckfolie abzudecken. Da die Drahtspulen in der Regel aus einem sehr dünnen Draht und aus nur wenigen Windungen bestehen, ist die Handhabung dieser Drahtspulen und ihre genaue Plazierung auf dem Substrat sehr schwierig. Die Drahtspulen verbiegen oder verziehen sich leicht während des Transports vom Spulenhersteller zum Kartenhersteller und müssen daher aufwendig verpackt werden. Weiterhin ist es sehr schwierig, die empfindlichen Drahtspulen maschinell auf dem Substrat zu positionieren und aufzukleben. Ein manuelles Positionieren und Aufkleben ist zwar ebenfalls möglich, jedoch relativ teuer.

Aus der EP 0 640 940 A2 ist ein Spulenelement für einen Datenträger mit einem integrierten Schaltkreis bekannt, das eine Drahtspule mit mehreren, unter Verwendung eines Lackes zusammengebackenen Wicklungen beinhaltet. Die solchermaßen versteifte Spule kann separat hergestellt und mit üblichen Werkzeugen gehandhabt werden. Praktisch erleichtert die Spulenversteifung vor allem den Transport. Die Einbringung der Spulen in Datenträger bleibt jedoch schwierig, da die Spulenenden bruchempfindlich sind und ihre Verbindung mit dem integrierten Schaltkreis aufwendig ist.

EP 0 481776 A2 offenbart desweiteren ein in Form eines TAB-Filmes ausgeführtes Trägerelement zur Herstellung einer kontaktlos arbeitenden IC-Karte, auf dem in Drucktechnik die Leiterbahnstrukturen der Karte hergestellt sind. Zu der Leiterbahnstruktur gehört eine mehrere Windungen umfassende Spulenstruktur. Eine Schwierigkeit bei solchen gedruckten Spulen bildet die Ausbildung ausreichend leistungsfähiger Spulen. Die Herstellung von gedruckten Spulen ist zudem vergleichsweise teuer.

Aus der nur gemäß Artikel 54 (3) EPÜ relevanten EP 0689164A2 ist desweiteren ein Verfahren zur Herstellung eines Datenträgers mit nicht berührender Kopplung bekannt, nach dem mittels eines konisch geformten Wickelkörpers zunächst eine Drahtform mit 3-dimensionaler Struktur hergestellt wird, die anschließend auf eine Folie abgestreift und dabei zusammengedrückt wird. Durch das Zusammendrücken entsteht eine flache Spule.

Aus der DE 44 16 687 ist es darüber hinaus bekannt, eine Spule in Form einer sehr dünnen Metallschicht auf einem Substrat herzustellen. Dieses Substrat kann in einen Kartenkörper eingebunden werden und so eine kontaktlose IC-Karte hergestellt werden. Die Herstellung derartiger Metallschichtspulen ist jedoch relativ teuer und es besteht die Gefahr, daß die Metallschicht bei mechanischer Beanspruchung der Karte unterbrochen wird.

Der Erfindung liegt die Aufgabe zugrunde, eine möglichst kostengünstige und weitgehend automatisierte Herstellung von Datenträgern mit integriertem Schaltkreis und nichtberührender Kopplung zu ermöglichen, die hohen Qualitätsanforderungen gerecht werden.

Das Grundprinzip der Erfindung besteht darin, daß zur Herstellung von kontaktlos betreibbaren Datenträgern keine losen drahtgewickelten Spulen verwendet werden, sondern Spulenelemente, bei denen eine drahtgewickelte Spule auf einem Träger zur mechanischen Stabilisierung der Spule, beispielsweise auf einer Folie, die im folgenden als Trägerfolie bezeichnet wird, befestigt ist. Bei der Herstellung der Spulenelemente werden die Spulen direkt auf dem Träger als Unterlage gewickelt, wobei ein nach dem Wickelvorgang entfernbarer Wickelkern der Spule die gewünschte Form verleiht. Die Spulenelemente können optional auch bereits einen IC aufweisen, der an die Enden der drahtgewickelten Spule kontaktiert ist. Die Spulenelemente können sowohl einzeln hergestellt und zu Datenträgern weiterverarbeitet werden als auch in Form eines Mehrnutzenbogens, der auf einem gemeinsamen Träger mehrere drahtgewickelte Spulen aufweist. Der Übergang von Mehrnutzen- zur Einzelverarbeitung ist prinzipiell während jedes Verfahrensschritts bei der Herstellung des Datenträgers möglich, d. h. der Datenträger kann komplett in Mehrnutzenfertigung hergestellt werden und am Ende vom Mehrnutzenbogen abgetrennt werden oder aber auch von Anfang an in Einzelfertigung oder es kann mit einer Mehrnutzenfertigung gestartet werden und während des Herstellungsprozesses kann der Mehrnutzenbogen aufgeteilt werden und mit Einzelfertigung fortgefahren werden. Zur Herstellung eines Mehrnutzenbogens bestehend aus mehreren drahtgewickelten Spulen, die auf einem gemeinsamen Träger befestigt sind, werden mehrere Spulen gleichzeitig gewickelt und auf dem Träger befestigt.

Die Aufgabe wird durch die in den nebengeordneten Ansprüchen angegebenen Merkmale gelöst.

Die Erfindung hat den Vorteil, daß sie eine effiziente und kostengünstige Herstellung von kontaktlos betreibbaren IC-Karten oder ähnlichen Datenträgern ermöglicht, da die schwierige Handhabung der empfindlichen Drahtspulen und die aufwendige Positionierarbeit der Drahtspulen auf dem Substrat entfällt. Ein weiterer Vorteil der Erfindung besteht darin, daß eine Mehrnutzenfertigung der Spulenelemente möglich ist und dadurch der Herstellungsprozeß effizienter wird. Weiterhin hat die Erfindung den Vorteil, daß die Spule sehr genau im Kartenkörper positioniert werden kann. Eine genaue Positionierung der Spule ist insbesondere dann wichtig, wenn der Kartenkörper anschließend mit Prägungen versehen wird, da dann sichergestellt werden muß, daß im Prägebereich keine Windungen verlaufen. Andernfalls würde die Prägequalität beeinträchtigt werden und es bestünde die Gefahr, daß die Windungen durch die Prägung unterbrochen werden.

Die Erfindung wird nachstehend anhand der in den Figuren dargestellten Ausführungsformen erläutert. Es zeigen:
- Fig. 1: eine IC-Karte im Aufriß,
- Fig. 2: eine Schnittdarstellung der IC-Karte aus Fig. 1,
- Fig. 3: ein Spulenelement bestehend aus einer Trägerfolie und einer darauf befestigten drahtgewickelten Spule,
- Fig. 4: ein Spulenelement, das zusätzlich zu der Trägerfolie und der drahtgewickelten Spule einen IC aufweist,
- Fig. 5: einen Mehrnutzenbogen bestehend aus mehreren drahtgewickelten Spulen, die auf einer gemeinsamen Trägerfolie befestigt sind,
- Fig. 6: eine Vorrichtung zur Herstellung des in Fig. 5 gezeigten Mehrnutzenbogen und
- Fig. 7: eine Schnittdarstellung der Vorrichtung aus Fig. 6.

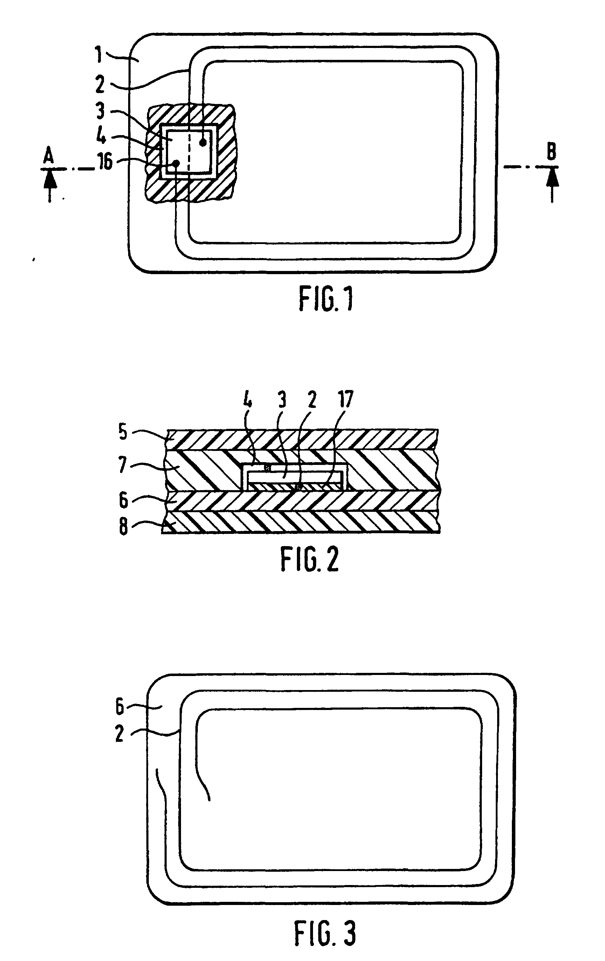

Fig. 1 zeigt eine IC-Karte als ein Beispiel für einen kontaktlos betreibbaren Datenträger im Aufriß. Die Abmessungen des Kartenkörpers 1 können nach der ISO-Norm 7810 festgelegt sein. Der Kartenkörper 1 enthält eine drahtgewickelte Spule 2 und ein Chipmodul 3, das in einer Aussparung 4 angeordnet ist. Bei der IC-Karte kann es sich um eine Telefonkarte, eine Ausweiskarte, eine Scheckkarte, eine Kreditkarte oder dergleichen handeln. Das Chipmodul 3 enthält einen in Fig. 1 nicht explizit dargestellten IC, der mit Kontaktflächen 16 des Chipmoduls 3 elektrisch leitend verbunden ist. Die Kontaktflächen 16 sind weiterhin mit den beiden Enden der drahtgewickelten Spule 2 verbunden. Je nach Anwendung können in dem IC unterschiedliche Daten gespeichert sein. Über die drahtgewickelte Spule 2 ist ein Datenaustausch mit einem externen Datenverarbeitungsgerät möglich. Die Datenübertragung zwischen der IC-Karte und dem externen Datenverarbeitungsgerät erfolgt dabei mittels elektromagnetischer Strahlung. Die Energieversorgung der IC-Karte wird in der Regel durch die vom externen Datenverarbeitungsgerät ausgesandte elektromagnetische Strahlung sichergestellt.

In Fig. 2 ist ein vergrößerter Ausschnitt eines Schnitts durch die in Fig. 1 dargestellte IC-Karte entlang der Linie A-B dargestellt. Dieser Schnitt zeigt den Schichtaufbau des Kartenkörpers 1. Der Kartenkörper 1 weist eine obere Deckfolie 5 und eine untere Deckfolie 8 auf. Unter der oberen Deckfolie 5 ist eine Substratfolie 7 angeordnet, die eine Aussparung 4 zur Aufnahme des Chipmoduls 3 aufweist. Auf die Substratfolie 7 folgt ein aus einer Trägerfolie 6 und der drahtgewickelten Spule 2 bestehendes Spulenelement. Weiterhin enthält der Kartenkörper das Chipmodul 3, das auf dem Spulenelement mit einer Vergußmasse 17 fixiert ist. Die Drahtenden der Spule 2 sind zur Kontaktierung an die Kontaktflächen 16 über das Chipmodul 3 geführt.

Der in Fig. 2 abgebildete Aufbau des Kartenkörpers stellt nur eine unter vielen Möglichkeiten dar. So können beispielsweise die Deckfolien 5 und 8 entfallen oder es können weitere Folien hinzukommen. Die Anzahl und die Reihenfolge der verwendeten Folien, deren Dicke und das verwendete Material können variieren. Ferner ist es auch möglich, den Kartenkörper 1 in Spritzgußtechnik herzustellen. Hierzu kann das Spulenelement in einer Spritzgußform plaziert werden und entweder einseitig oder beidseitig mit Spitzgußmasse versehen werden.

Fig. 3 zeigt ein Spulenelement, bestehend aus einer Trägerfolie 6 und einer darauf fixierten drahtgewickelten Spule 2. Die Spule 2 kann mittels eines Klebers, der beispielsweise thermisch oder durch Druck aktivierbar ist, auf der Trägerfolie 6 fixiert werden. Durch diese Fixierung wird die empfindliche Spule 2 gegen unbeabsichtigte Deformation geschützt. Das Spulenelement besitzt eine höhere mechanische Stabilität als eine lose Spule und auch eine größere Angriffsfläche, so daß die maschinelle Handhabung des Spulenelements einfacher ist als die einer losen Spule.

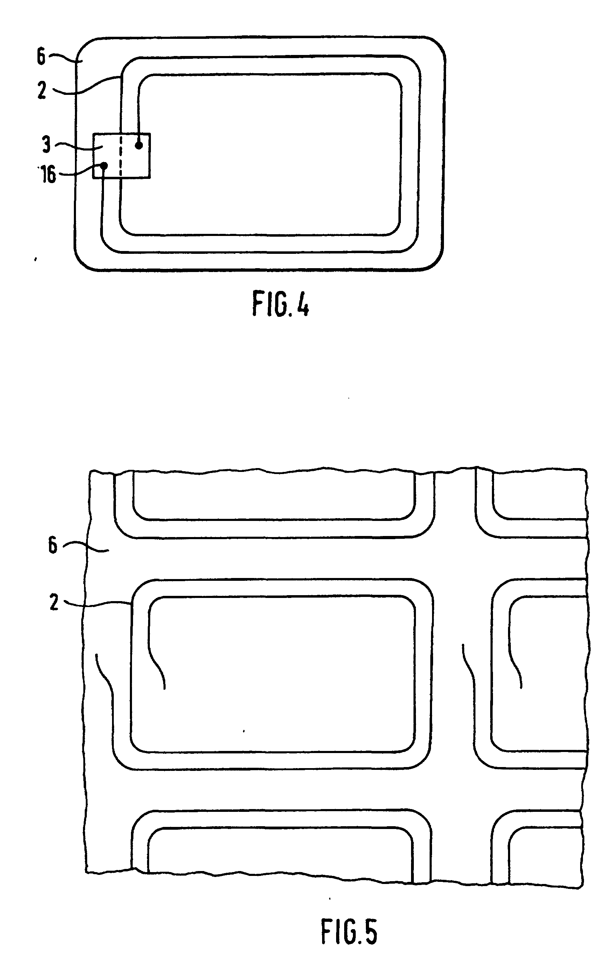

Fig. 4 zeigt ein Spulenelement, bei dem zusätzlich zur Trägerfolie 6 und zur drahtgewickelten Spule 2 ein Chipmodul 3 vorgesehen ist. Das Chipmodul 3 kann, wie in Fig. 4 gezeigt, über der Spule 2 angeordnet sein, wobei die Drahtenden der Spule 2 zu den Kontaktflächen 16 des Chipmoduls 3 hochgezogen sind und ist mittels eines geeigneten Klebers mit der Spule 2 und/oder der Trägerfolie 6 verbunden. Alternativ zu dem in Fig. 4 dargestellten Ausführungsbeispiel könnte das Chipmodul 3 auch zwischen der Spule 2 und der Trägerfolie 6 angebracht sein oder auf der Rückseite der Trägerfolie 6. Im letztgenannten Fall kann die Kontaktierung zwischen dem Chipmodul 3 und der Spule durch Bohrungen in der Trägerfolie 6 erfolgen. Der Aufbau des Chipmoduls 3 ist an sich bekannt. Das Chipmodul 3 enthält einen integrierten Schaltkreis, der über Bonddrähte mit wenigstens zwei Kontaktflächen 16 des Chipmoduls 3 verbunden ist. Die Kontaktflächen 16 des Chipmoduls 3 sind außerdem mit den Enden der drahtgewickelten Spule 2 verbunden. Das in Fig. 4 abgebildete Spulenelement stellt im Prinzip bereits eine voll funktionsfähige IC-Karte dar. Das Auflaminieren weiterer Schichten bzw. das Aufspritzen weiteren Materials als gegebenenfalls weitere Verarbeitungsschritte bei der Herstellung einer IC-Karte aus dem Spulenelement dienen hauptsächlich dazu, die gewünschten äußeren Abmessungen der IC-Karte zu erreichen, eine ausreichende mechanische Haltbarkeit sicherzustellen, die an die Karte geforderten Sicherheitsansprüche zu erfüllen und die Karte optisch ansprechend zu gestalten.

Fig. 5 zeigt einen Mehrnutzenbogen, bei dem mehrere drahtgewickelte Spulen 2 auf einer gemeinsamen Trägerfolie 6 angeordnet sind. Je nach Ausführungsform enthält der Mehrnutzenbogen Spulenelemente gemäß Fig. 3 oder gemäß Fig. 4. Wie weiter unten noch im einzelnen erläutert wird, werden bei der Herstellung des Mehrnutzenbogens gleichzeitig eine Vielzahl von Spulenelementen gefertigt. In einer Ausführungsform der Erfindung erfolgt die Weiterverarbeitung des Mehrnutzenbogens, der aus einer Vielzahl von Spulenelementen besteht, zu fertigen IC-Karten durchgehend in Mehrnutzenfertigung. Bei dieser Ausführungsform werden also auch die weiteren Verarbeitungsschritte am kompletten Bogen durchgeführt und erst am Ende des Fertigungsprozesses werden die einzelnen IC-Karten aus dem Bogen herausgeteilt. Dadurch läßt sich der Herstellungsprozeß sehr effizient gestalten, da mit jedem Verarbeitungsschritt gleichzeitig mehrere Stücke verarbeitet werden.

Es kann jedoch auch vorkommen, daß ein oder mehrere Verarbeitungsschritte vorteilhafter nicht am Mehrnutzenbogen, sondern an einzelnen Stücken vorgenommen werden. Dementsprechend ist der Mehrnutzenbogen dann vor diesen Verarbeitungsschritten in einzelne Stücke zu zerteilen. Um eine möglichst effiziente Herstellung der IC-Karte zu ermöglichen, ist somit der Herstellungsprozeß zunächst dahingehend zu analysieren, welche Verarbeitungsschritte besser an einem Mehrnutzenbogen vorgenommen werden können und welche Verarbeitungsschritte besser an Einzelstücken vorgenommen werden können. Abhängig vom Ergebnis der Analyse wird dann festgelegt, bei welchem Produktionsschritt von der Mehrnutzen- auf die Einzelstückfertigung übergegangen wird.

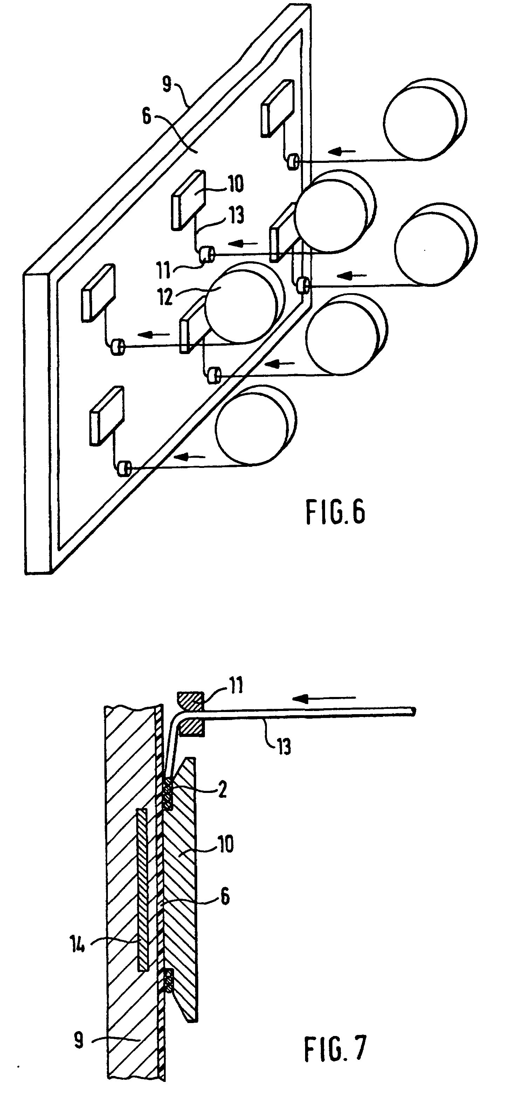

Fig. 6 zeigt eine Vorrichtung zur Herstellung von Mehrnutzenbögen von Spulenelementen. Die Trägerfolie 2 ist auf eine Aufnahmeplatte 9 aufgebracht. Die Haftung der Trägerfolie auf der Aufnahmeplatte 9 kann beispielsweise durch Erzeugen eines Unterdrucks zwischen der Trägerfolie 6 und der Aufnahmeplatte 9 bewirkt werden. An den Stellen der Trägerfolie 6, an denen die drahtgewickelten Spulen 2 angeordnet werden sollen, sind Wickelkerne 10 befestigt. Die Wickelkerne 10 werden mittels eines durch die Aufnahmeplatte 9 erzeugten Magnetfelds an ihrer Position festgehalten. Durch diese Art der Halterung kann eine Beschädigung der Trägerfolie 6 vermieden werden und es bleibt genügend Raum für das Wickeln der Spulen 2. Beim Wickeln der Spulen 2 werden den Wickelkernen 10 über Drahtführungen 11 von Vorratsrollen 12 Drähte 13 zugeführt. Der Wickelvorgang erfolgt für alle Wickelkerne 10 gemeinsam durch eine exzentrische Bewegung der Aufnahmeplatte 9. Alternativ zur Exzenterbewegung der Aufnahmeplatte 9 könnte auch eine entsprechende Bewegung der Drahtführungen 11 vorgenommen werden.

In Fig. 7 ist ein vergrößerter Ausschnitt der in Fig. 6 dargestellten Vorrichtung im Querschnitt abgebildet. In Fig. 7 ist einer der Wickelkerne 10 abgebildet, der mittels eines in der Aufnahmeplatte 9 angeordneten Elektromagneten 14 gegen die auf der Aufnahmeplatte 9 aufliegende Trägerfolie 6 gepreßt wird. Der Wickelkern 10 ist so geformt, daß er zusammen mit der auf der Aufnahmeplatte 9 aufliegenden Trägerfolie 6 als Widerlager einen ringförmigen Spalt bildet, in den der Draht 13 gewickelt werden kann. Die Zuführung des Drahtes 13 zu dem ringförmigen Spalt erfolgt mittels der Drahtführung 11. Beim Wickelvorgang wird die Drahtführung 11 um den ringförmigen Spalt herumgeführt oder es wird durch eine exzentrische Bewegung der Aufnahmeplatte 9 der ringförmige Spalt in entsprechender Weise um die Drahtführung 11 herumgeführt. In beiden Fällen entsteht dabei im ringförmigen Spalt die drahtgewickelte Spule 2.

Die Herstellung eines Mehrnutzenbogens mit der in den Fig. 6 und 7 abgebildeten Vorrichtung läuft folgendermaßen ab:

Die Trägerfolie 6 wird auf die Aufnahmeplatte 9 aufgelegt und durch Anlegen eines Unterdrucks zwischen der Trägerfolie 6 und der Oberfläche der Aufnahmeplatte 9 fixiert. Der Unterdruck kann dadurch erzeugt werden, daß durch nicht figürlich dargestellte Kanäle in der Aufnahmeplatte 9 Luft abgepumpt wird. Die Wickelkerne 10 werden mit einer Positioniereinrichtung an den gewünschten Positionen der Trägerfolie 6 angeordnet. Die Positioniereinrichtung kann beispielsweise Greifarme zur Aufnahme der Wickelkerne 10 enthalten. Die Wickelkerne 10 können aber auch durch Unterdruck oder mittels Elektromagneten von der Positioniereinrichtung gehalten werden. Sobald die Wickelkerne 10 auf der Trägerfolie 2 positioniert sind, werden sie durch Aktivieren des in der Aufnahmeplatte 9 befindlichen Elektromagneten 14 auf der Trägerfolie 6 fixiert. Anschließend werden die Drähte 13 mittels der Drahtführungen 11 an die Wickelkerne 10 herangeführt und gemäß bekannten Verfahren werden die Drahtenden in die Wickelkerne 10 eingefädelt.

Durch eine exzentrische Bewegung zwischen der Aufnahmeplatte 9 und den Drahtführungen 11 werden die Drähte 13 um die Wickelkerne 10 gewickelt, so daß in den ringförmigen Spalten zwischen den Wickelkernen 10 und der auf der Aufnahmeplatte 9 aufliegenden Trägerfolie 6 drahtgewickelte Spulen 2 entstehen. Der Wickelvorgang wird mit einer exzentrischen Bewegung durchgeführt, da eine Drehbewegung der Aufnahmeplatte 9 zu einer Verwirrung der Drähte 13 führen würde und somit für eine Mehrnutzenfertigung nicht geeignet ist. In dem bevorzugten Ausführungsbeispiel erfolgt die Exzenterbewegung durch eine Bewegung der Aufnahmeplatte 9. Alternativ dazu ist es jedoch auch möglich, die Drahtführungen 11 in einer entsprechenden Weise zu bewegen. Zur dauerhaften Fixierung der Spulen 2 können die Drähte 13 mit einer Fixiermasse versehen werden, die die einzelnen Windungen der Spulen 2 miteinander verbindet und die Spulen 2 auf der Trägerfolie 6 fixiert. Die Fixiermasse kann aber auch auf die Trägerfolie 6 aufgebracht werden und zwar an die Stellen, an denen die Spulen 2 positioniert werden. Dabei kann die Fixiermasse im Bereich der Spulen 2 entweder vollflächig oder nur teilweise aufgebracht werden. Die Aushärtung der Fixiermasse kann durch Druck, durch Ultraschall, durch Temperaturerhöhung oder durch Bestrahlung mit ultraviolettem Licht begünstigt werden. Die Temperaturerhöhung kann beispielsweise dadurch erzeugt werden, daß man einen elektrischen Strom durch die Spulen 2 fließen läßt.

Nach Beendigung des Wickelvorgangs werden die Drähte 13 durchtrennt und die Wickelkerne 10 werden von der Trägerfolie 6 entfernt, so daß auf der Trägerfolie die drahtgewickelten Spulen 2 zurückbleiben. Das Entfernen der Wickelkerne 10 wird dadurch erleichtert, daß sie mit einer Antihaftbeschichtung, beispielsweise Teflon, versehen sind, die ein Haften der Fixiermasse auf den Wickelkernen verhindert. Nach Aufheben des Unterdrucks zwischen der Aufnahmeplatte 9 und der Trägerfolie 6 kann die Trägerfolie 6 einschließlich den darauf fixierten drahtgewickelten Spulen 2 von der Aufnahmeplatte 9 entfernt wrden und der weiteren Verarbeitung zugeführt werden. Diese weitere Verarbeitung kann entweder an dem von der Trägerfolie und den darauf befindlichen Spulen 2 gebildeten Mehrnutzenbogen durchgeführt werden oder dieser Mehrnutzenbogen kann in einzelne Spulenelemente aufgeteilt werden, die jeweils aus einer drahtgewickelten Spule 2 und einem Ausschnitt der Trägerfolie 6 bestehen.

In einer Weiterbildung der Erfindung dient die in Fig. 6 und 7 dargestellte Vorrichtung ferner dazu, die Spulenelemente mit je einem Chipmodul 3 zu bestücken. Hierzu ist in jedem Wickelkern 10 eine Aussparung vorgesehen, die ein Chipmodul 3 aufnehmen kann. Außerdem weist jeder Wickelkern 10 Drahtführungseinrichtungen auf, in die die Drahtenden der Spule 2 eingelegt werden können und so den am Chipmodul 3 vorgesehenen Kontaktflächen 16 zugeführt und mit diesen elektrisch leitend verbunden werden können.

In einer Abwandlung der Erfindung werden die Spulen 2 nicht bereits während des Wickelvorgangs auf die Trägerfolie 6 aufgebracht, sondern zunächst vollständig auf den Wickelkernen 10 gewickelt und anschließend auf die Trägerfolie 6 übertragen. Die Übertragung erfolgt direkt von den Wickelkernen 10 auf die Trägerfolie 6, so daß eine Handhabung von losen Spulen 2 nicht erforderlich ist. Bei dieser Ausführungsform können die Wickelkerne 10 in ihrer Form etwas abgewandelt sein, um ein Abrutschen der Windungen von den Wickelkernen 10 zu verhindern oder dieses Abrutschen kann anderweitig - beispielsweise durch eine abnehmbare Sperre - verhindert werden.

## Patentansprüche

1. Verfahren zur Herstellung von Spulenelementen für einen Datenträger mit integriertem Schaltkreis und nichtberührender Kopplung, **dadurch gekennzeichnet, daß** auf einem als Unterlage dienenden Träger (6) unter Verwendung eines entfernbaren Wickelkerns wenigstens eine Spule (2) gewickelt wird und die Spule (2) während des Wickelvorgangs oder unmittelbar nach dem Wickelvorgang auf dem Träger (6) befestigt wird.

2. Verfahren nach Anspruch 1, **dadurch gekennzeichnet, daß** der Träger (6) lösbar auf einer Aufnahmeplatte (9) befestigt wird und wenigstens ein Wikkelkörper (10) auf dem Träger (6) positioniert wird.

3. Verfahren nach Anspruch 2, **dadurch gekennzeichnet, daß** der Träger (6) durch Anlegen eines Unterdrucks zwischen dem Träger (6) und der Aufnahmeplatte (9) lösbar befestigt wird.

4. Verfahren nach Anspruch 2 oder 3, **dadurch gekennzeichnet, daß** der oder die Wickelkörper (10) durch ein von der Aufnahmeplatte (9) erzeugtes magnetisches Feld gehalten wird oder werden.

5. Verfahren nach einem der Ansprüche 2 - 4, **dadurch gekennzeichnet , daß** an jeden Wickelkörper (10) mittels einer Drahtführung (11) ein Draht (13) herangeführt wird und durch exzentrische Bewegung der Aufnahmeplatte (9) oder durch entsprechende Bewegung der Drahtführungen (11) auf jeden Wikkelkörper (10) eine Spule (2) gewickelt wird.

6. Verfahren nach einem der Ansprüche 2 - 5, **dadurch gekennzeichnet , daß** die Wickelkörper (10) nach Abschluß des Wickelvorgangs vom Träger (6) entfernt werden und die drahtgewickelten Spulen (2) auf dem Träger (6) verbleiben.

7. Verfahren nach einem der Ansprüche 2 - 5, **dadurch gekennzeichnet, daß** die drahtgewickelten Spulen (2) durch eine Fixiermasse (17) auf dem Träger (6) befestigt werden, die vor dem Wickelvorgang auf dem Träger (6) aufgebracht wird oder den Drähten (13) während des Wickelvorgangs zugeführt wird.

8. Verfahren nach einem der Ansprüche 2-7, **dadurch gekennzeichnet , daß** die Drahtenden jeder drahtgewickelten Spule (2) an ein Chipmodul (3) kontaktiert werden.

9. Vorrichtung zur Herstellung von Spulenelementen für Datenträger mit integriertem Schaltkreis und nichtberührender Kopplung, **dadurch gekennzeichnet, daß** sie eine Aufnahmeplatte (9) zur Aufnahme eines Trägers (6) für die mechanische Stabilisierung von drahtgewickelten Spulen (2) aufweist, wenigstens einen Wickelkern (10) zum Wickeln der Spulen (2), welcher entfernbar auf den Träger (6) aufgesetzt wird, wenigstens eine Drahtführung (11) zum Heranführen eines Drahtes (13) an den Wickelkern (10) und Mittel zum Erzeugen einer exzentrischen Bewegung der Aufnahmeplatte (9) oder einer entsprechenden Bewegung der Drahtführung (11).

10. Vorrichtung nach Anspruch 9, **dadurch gekennzeichnet, daß** jeder Wickelkörper (10) wenigstens in dem Bereich, auf den der Draht (13) aufgewickelt wird, mit einer Beschichtung ausgestattet ist, auf der eine Fixiermasse (17) zur Befestigung der drahtgewickelten Spule (2) auf dem Träger (6) schlecht haftet.

11. Vorrichtung nach einem der Ansprüche 9 oder 10, **dadurch gekennzeichnet , daß** jeder Wickelkörper (10) Aussparungen zur Aufnahme eines Chipmoduls (3) aufweist.

12. Vorrichtung nach Anspruch 9 mit einem Mehrnutzenbogen , **dadurch gekennzeichnet, daß** der Mehrnutzenbogen aus einem Träger (6) besteht, der dazu ausgebildet ist, in einem Wickelvorgang eine Mehrzahl von Spulen (2) gleichzeitig aufzunehmen.

13. Verwendung eines Verfahrens nach einem der Ansprüche 1 bis 3 zur Herstellung eines Datenträgers mit integriertem Schaltkreis und nichtberührender Kopplung.

14. Verwendung des Verfahrens nach Anspruch 13, **dadurch gekennzeichnet, daß** der Datenträger aus mehreren Schichten laminiert wird und das Spulenelement eines dieser Schichten bildet.

15. Verwendung des Verfahrens nach Anspruch 13, **dadurch gekennzeichnet, daß** das Spulenelement einseitig oder beidseitig mit Spritzgußmasse versehen wird.

## Claims

1. A method for producing coil elements for a data carrier with an integrated circuit and noncontacting coupling, **characterized in that** at least one coil (2) is wound on a carrier (6) serving as a base using a removable winding core, and the coil (2) is fastened to the carrier (6) during the winding process or directly after the winding process.

2. A method according to claim 1, **characterized in that** the carrier (6) is fastened detachably to a receiving plate (9), and at least one winding body (10) is positioned on the carrier (6).

3. A method according to claim 2, **characterized in that** the carrier (6) is fastened detachably by application of a vacuum between the carrier (6) and the receiving plate (9).

4. A method according to claim 2 or 3, **characterized in that** the winding body or bodies (10) are held by a magnetic field produced by the receiving plate (9).

5. A method according to any of claims 2 to 4, **characterized in that** a wire (13) is brought near each winding body (10) by means of a wire guide (11), and a coil (2) is wound onto each winding body (10) by eccentric motion of the receiving plate (9) or by corresponding motion of the wire guides (11).

6. A method according to any of claims 2 to 5, **characterized in that** the winding bodies (10) are removed from the carrier (6) after the end of the winding process, and the wire-wound coils (2) remain on the carrier (6).

7. A method according to any of claims 2 to 5, **characterized in that** the wire-wound coils (2) are fastened to the carrier (6) by a fixing compound (17) which is applied to the carrier (6) before the winding process or is fed to the wires (13) during the winding process.

8. A method according to any of claims 2 to 7, **characterized in that** the wire ends of each wire-wound coil (2) are contacted with a chip module (3).

9. An apparatus for producing coil elements for data carriers with integrated circuits and noncontacting coupling, **characterized in that** it has a receiving plate (9) for receiving a carrier (6) for mechanical stabilization of wire-wound coils (2), at least one winding core (10) for winding the coils (2) which is placed removably on the carrier (6), at least one wire guide (11) for bringing a wire (13) near the winding core (10), and means for producing an eccentric motion of the receiving plate (9) or a corresponding motion of the wire guide (11).

10. An apparatus according to claim 9, **characterized in that** each winding body (10) is equipped, at least in the area onto which the wire (13) is wound, with a coating to which a fixing compound (17) for fastening the wire-wound coil (2) to the carrier (6) adheres poorly.

11. An apparatus according to either claim 9 or 10, **characterized in that** each winding body (10) has gaps for receiving a chip module (3).

12. An apparatus according to claim 9 having a multiple-copy sheet, **characterized in that** the multiple-copy sheet consists of a carrier (6) which is designed to receive a plurality of coils (2) simultaneously in a winding process.

13. Use of a method according to any of claims 1 to 3 for producing a data carrier with an integrated circuit and noncontacting coupling.

14. Use of the method according to claims 13, **characterized in that** the data carrier is laminated from a plurality of layers and the coil element forms one of said layers.

15. Use of the method according to claim 13, **characterized in that** the coil element is provided with injection molding compound on one side or on both sides.

## Revendications

1. Procédé de fabrication d'éléments de bobine pour un support de données avec un circuit intégré et à couplage sans contact, **caractérisé en ce qu'**on réalise le bobinage d'au moins une bobine (2) sur un support (6) servant de base avec utilisation d'un noyau de bobine susceptible d'être enlevé et ou fixe la bobine (2) sur le support (6) pendant ou immédiatement après le processus de bobinage,.

2. Procédé selon la revendication 1, **caractérisé en ce que** le support (6) est fixé de façon détachable sur la plaque de réception (9) et **en ce qu'**au moins un corps de bobinage (10) est positionné sur le support (6).

3. Procédé selon la revendication 2, **caractérisé en ce que** le support (6) est fixé de façon détachable par l'application d'une dépression entre le support (6) et la plaque de réception (9).

4. Procédé selon la revendication 2 ou 3, **caractérisé en ce que** le ou les corps de bobinage (10) est/sont maintenu(s) au moyen d'un champ magnétique créé par la plaque de réception (9).

5. Procédé selon l'une des revendications 2 à 4, **caractérisé en ce que** l'on amène sur chaque corps de bobinage (10) un fil (13) au moyen d'un guidage de fil (11) et on réalise le bobinage d'une bobine (2) par déplacement excentrique de la plaque de réception (9) ou par déplacement correspondant du guidage de fil (11) sur chaque corps de bobinage (10).

6. Procédé selon l'une des revendications 2 à 5, **caractérisé en ce que** l'on éloigne le corps de bobinage (10), du support (6) après la fin du processus de bobinage (6), les bobines (2) embobinées restant sur le support (6).

7. Procédé selon l'une des revendications 2 à 5, **caractérisé en ce que** les bobines embobinées (2) sont fixées sur le support (6) au moyen d'une masse de fixation (17) qui est appliquée sur le support (6) avant le processus de bobinage ou qui est amenée aux fils (13) pendant le processus de bobinage.

8. Procédé selon l'une des revendications 2 à 7, **caractérisé en ce que** les extrémités de fils de chaque bobine embobinée (2) sont amenées en contact avec un module de puce (3).

9. Dispositif pour fabriquer des éléments de bobine pour un support de données avec un circuit intégré et à couplage sans contact, **caractérisé en ce qu'**il comporte : une plaque de réception (9) pour recevoir un support (6) pour la stabilisation mécanique de bobines embobinées (2) au moins un noyau de bobinage (10) pour le bobinage de la bobine (2), qui est placé sur le support (6) de façon à permettre son enlèvement, au moins un guidage de fil (11) pour amener un fil (13 sur le noyau de bobinage (10) et des moyens pour réaliser un déplacement excentrique de la plaque de réception (9) ou un déplacement correspondant du guidage de fil (11).

10. Dispositif selon la revendication 9, **caractérisé en ce que** chaque corps de bobine (10) est muni, au moins dans la zone où le fil (13) est embobiné, d'un revêtement sur lequel une masse de fixation (17) pour fixer la bobine embobinée (2) sur le support (6) adhère mal.

11. Dispositif selon l'une des revendications 9 ou 10, **caractérisé en ce que** chaque corps de bobine (10) présente des évidements pour recevoir un module de puce (3).

12. Dispositif selon la revendication 9, avec une feuille à utilisation multiple, **caractérisé en ce que** la feuille à utilisation multiple est composée d'un support (6) qui est réalisé de sorte que, dans un processus de bobinage, il peut simultanément recevoir une pluralité de bobines (2).

13. Application d'un procédé selon l'une des revendications 1 à 3, pour la réalisation d'un support de données avec circuit intégré et à couplage sans contact.

14. Application du procédé selon la revendication 13, **caractérisé en ce que** le support de données est stratifié à partir d'une pluralité de couches et l'élément de bobine constitue l'une de ces couches.

15. Application du procédé selon la revendication 13, **caractérisée en ce que** l'élément de bobine est muni d'un côté ou des deux côtés d'une masse à moulée par injection.
